# EUROPEAN PATENT APPLICATION

(11) **EP 2 713 346 A1**
(43) Date of publication of application: **02.04.2014**
(21) Application number: 12186682.6
(22) Date of filing: 28.09.2012
(51) Int. Cl.: G07F 7/10, G07F 7/08, G06Q 20/34

(54) **A method of processing a card present, card payment transaction**

(71) Applicant: MobiPayPoint Limited, Dooradoyle Limerick (IE)
(72) Inventor: Gormley, Dave, Newry, Down BT35 6JB (GB)
(74) Representative: O'Connor, Michael Donal

(57) **Abstract**

This invention relates to a method of processing a card present, card payment transaction. The method (1) comprises obtaining (11, 21) and comparing a PAN taken from the magnetic strip of a card with the PAN taken from the chip of a card. If the PANs are found to differ, the card payment transaction is declined (51) as this indicates that the payment attempt is a fraudulent attempt. If the card payment terminal is unable to retrieve the PAN from either of the magnetic strip and/or the chip, the payment transaction is declined (51). In this way, a far more secure method of processing a card present, card payment transaction is provided.

## Description

### Introduction

This invention relates to a method of processing a card present, card payment transaction.

Over the last number of years there has been a consumer trend towards cashless transactions. Use of credit cards and debit cards is on the rise and these methods are seen by many as a more desirable mode of payment than cash. There are however problems with credit card and debit card transactions, hereinafter referred to simply as card present, card payment transactions. Most importantly, many of the known card present, card payment transactions are highly susceptible to fraud and many of the transaction methodologies are inherently insecure.

There are several fraudulent attacks that can be made to exploit the weaknesses of card present, card payment transactions. For example, certain card present, card payment transactions rely on reading the magnetic strip data from a card and using that data to process a payment. However, it is relatively simple for criminals with temporary access to the card to "skim" the account details from the magnetic strip and thereafter produce a duplicate card with the same magnetic strip. The duplicate card can thereafter be used to make card present, card payment transactions unbeknownst to the card owner.

In order to enhance the security of card present, card payment transactions, Chip and PIN technology was introduced some years ago. Chip and PIN technology requires the person presenting the card for payment to supply a PIN code that is verified by the Chip on the card. If the PIN entered is incorrect, the transaction is not supposed to proceed. However, there are also several attacks used against Chip and PIN technology. For example, one technique that is often used with stolen cards is to coat the Chip with clear nail varnish or other coating so that the Chip cannot be read. In these instances, the vendor will typically assume that there is a fault with the machine or an innocent fault with the card and the PIN requirement will be overridden by the terminal operator. The payment will then be processed on the basis of the magnetic strip details which may be fraudulent or which may be from a stolen card.

In more recent times, near field communications (NFC) transactions are gaining in popularity as a way of making very fast card present, card payment transactions. These NFC transactions require an individual to present their card to a NFC reader and the card details are read by the NFC reader and used to process a payment. Although this provides a very fast payment transaction, there are numerous security concerns about this payment methodology. In particular, no other interaction is required other than the card holder bringing their card into close proximity with a card reader in order for the transaction to be completed. It is envisaged that an unscrupulous criminal could use a portable card reader equipped with NFC technology to process payments of third parties' cards, unbeknownst to the card holder, by moving the portable card reader into close proximity to the card. The card could even be stored in a wallet, pocket or a bag at the time. Provided that the mobile card reader is brought into close enough proximity to the card, a payment transaction could be processed without the knowledge or consent of the card holder. Accordingly, at present there is a limitation on the maximum transaction amount that can be processed by these NFC transactions however this is only limiting the exposure to the fraud rather than preventing the fraud occurring in the first place.

It is an object of the present invention to provide a method that overcomes at least some of the above problems with the known methods of processing a card present, card payment transaction. These problems, although they ultimately result in a fraud being perpetrated, are in fact inherently technical in nature as they stem from the insecure methods of processing data in card present, card payment transactions.

### Statements of Invention

According to the invention there is provided a method of processing a card present, card payment transaction using a card payment terminal comprising the steps of:
swiping the card in a magnetic strip reader and retrieving the personal account number (PAN) from a magnetic strip on the card;
retrieving the PAN from a chip on the card;
comparing the PAN retrieved from the chip with the PAN retrieved from the magnetic strip; and
on the PAN from the chip differing from the PAN from the magnetic strip, declining the card present, card payment transaction.

The method according to the invention is significantly more secure than the previously known methods of processing card present, card payment transactions and obviates the possibility of numerous disparate fraudulent attempts. If the PAN on the magnetic strip has been altered or if a duplicate card with a magnetic strip having another card's PAN details loaded thereon is presented, these attempts will be detected and the transaction will be declined. The technical problem of providing a more secure data processing methodology is overcome by the technical solution of using the card payment terminal to compare a PAN from two separate, disparate sources on the card. The use of the PAN from both the chip and the magnetic strip is counterintuitive as it lengthens a payment transaction in some instances and is contrary to the accepted practice in the field. The technical solution is also provided without having to alter the vast majority of the existing card payment terminals and in most cases can be implemented by using the existing infrastructure in a different way.

In one embodiment of the invention there is provided a method in which the step of retrieving the PAN from the chip on the card comprises using near field communications to retrieve the PAN from the chip on the card. This is seen as a particularly preferred aspect of the present invention and in fact the present invention may be used to overcome security weaknesses in near field communication (NFC) payment processes. By requiring the card owner to swipe the card, it will not be possible for an unscrupulous individual to process a payment unbeknownst to the card holder. The card holder will have to swipe the card in order for a payment to be processed. This overcomes many of the limitations of NFC payments without increasing significantly the amount of time required to process the payment.

In one embodiment of the invention there is provided a method in which the step of retrieving the PAN from the chip on the card comprises inserting the card into a card reader and using a chip reader to read the chip.

In one embodiment of the invention there is provided a method in which on the card payment terminal being unable to retrieve the PAN from the magnetic strip, the method comprising the step of declining the card present, card payment transaction.

In one embodiment of the invention there is provided a method in which on the card payment terminal being unable to retrieve the PAN from the chip, the method comprising the step of declining the card present, card payment transaction.

In one embodiment of the invention there is provided a method comprising the additional steps of:
the card owner entering a Personal Identification Number (PIN) into the card payment terminal, the card payment terminal passing the entered PIN to the chip on the card for PIN verification;
the card payment terminal receiving verification from the chip as to whether or not the PIN entered by the card owner corresponds to a PIN stored on the chip; and
on the PIN entered into the card payment terminal by the card owner differing from the PIN stored on the chip, terminating the card payment transaction, and on the PIN entered into the card payment terminal by the card owner corresponding to the PIN stored on the chip, proceeding with the card payment transaction.

By implementing such a method, the method provides the security of Chip and PIN technology by carrying out a PIN comparison on the chip but also is more robust as a check is carried out to ensure that the PAN on the magnetic strip, and the account that will ultimately be charged, has not been altered. This will obviate the possibility of the method according to the invention being susceptible to fraud and will enable the card to thereafter be used in numerous disparate types of transactions.

In one embodiment of the invention there is provided a method in which there is further provided a remote processing server comprising a processor, an accessible memory and a communications module for communications with the remote card payment terminal; the method comprising the additional steps of:
the card payment terminal generating a payment packet including the PAN and a payment amount, and transmitting the payment packet to the processing server over the internet; and
the processing server processing the payment packet and returning a payment packet response to the card payment terminal.

In this way, the payment is processed as an internet based, card not present transaction even though the card is present and has been checked. This will allow the flexibility of a card not present internet transaction with the security of a card present transaction that has been thoroughly checked.

In one embodiment of the invention, the PAN for the payment packet is retrieved from the chip. In another embodiment, the PAN for the payment packet is retrieved from the magnetic strip.

In one embodiment of the invention there is provided a method comprising the additional step of entering a CVV number of the card into the card payment terminal and in which the payment processing step of generating a payment packet further comprises including the CVV in the payment packet. By providing the CVV number, the method according to the invention will be even more robust and secure than the known methods.

### Detailed Description of the Invention

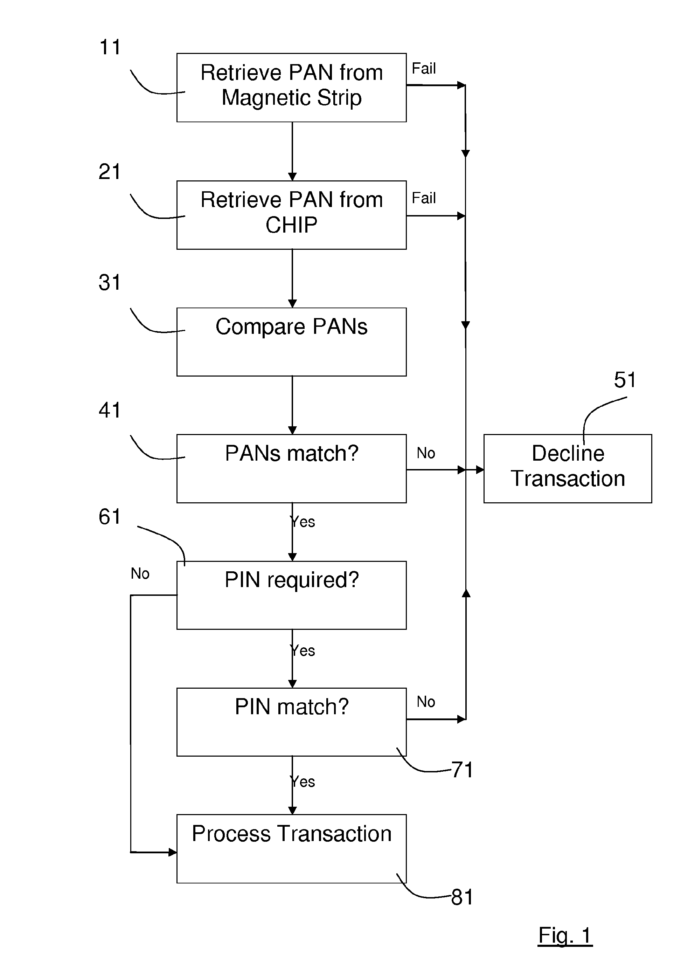

The invention will now be more clearly understood from the following description of some embodiments thereof given by way of example only with reference to the accompanying drawings, in which:-
Figure 1 is flow diagram of the method according to the invention.

Referring to Figure 1, there is shown a flow diagram of the method according to the invention, indicated generally by the reference numeral 1. The method comprises the initial steps of retrieving a personal account number (PAN) from a magnetic strip of a card (step 11) and retrieving the PAN from a chip on the card (step 21). The PAN is retrieved from the chip on the card in step 21 by either inserting the card into a card reader of a card payment terminal or by the card payment terminal using NFC to read the PAN from the chip. The PAN is retrieved from the magnetic strip in step 11 by swiping the card in a magnetic reader of the card payment terminal. The steps 11 and 21 of retrieving the PAN from both the magnetic strip and the chip are not strictly sequential and either step can be performed before or after the other. Indeed, if the card payment terminal is able to do so, the steps 11, 21 can be performed simultaneously.

Once the PANs have been retrieved from the magnetic strip and the chip, the pair of PANs are compared in step 31. If it is determined that the PANs do not match, or in other words, that the PAN on the magnetic strip is not the same as the PAN on the chip in step 41, the card present, card payment transaction is declined in step 51. If however it is determined that the PAN on the magnetic strip is the same as the PAN on the chip in step 41, the method proceeds to step 61 where a check is carried out to see whether a PIN is required. It will be understood that for NFC type transactions, a PIN will not be required however if Chip and PIN authentication is required, the card holder will be requested to enter their PIN. If no PIN is required, the method proceeds to step 81 in which the transaction is processed. If however a PIN is required, the card holder will be prompted to enter their PIN by the card payment terminal and the card will verify whether or not the PIN entered is a match to the PIN on the card's chip in step 71. If the PIN on the card is not a match to the PIN entered, the method proceeds to step 51 and the transaction is declined. Additional PIN entry attempts may be allowed. If however, the PIN on the card is a match to the PIN entered, the method proceeds to step 81 and the transactions is processed.

In addition to the above, if the card payment terminal is unable to retrieve either of the PAN from the magnetic strip or the PAN from the chip in steps 11 and 21 respectively, the method proceeds to step 51 and the transaction is declined.

In order to process the transaction, a payment packet is generated by the card payment terminal and the payment packet is transmitted to a remote payment processing server. The payment packet includes the PAN and a payment amount. If desired, the payment packet may also include one or more of a name of the card account owner and an expiry date of the card. The remote processing server comprises a processor, an accessible memory and a communications module for communications with the remote card payment terminal. Preferably, the payment packet is transmitted to the processing server over the internet and processed as an internet based, card not present transaction as this will provide greater flexibility to process the card present, card payment transaction and will allow the process to proceed without being restricted to EMV2 specification steps. The remote payment processing server processes the payment packet and returns a payment packet response to the card payment terminal. Furthermore, the method may comprise the additional step of a terminal operator or the card holder entering a CVV number of the card into the card payment terminal and the payment processing step of generating a payment packet further comprises including the CVV in the payment packet. Again, this will enhance the security of the method.

In the above embodiment, the transaction is processed online in real time. As an alternative, the transaction may be processed offline. In other words, one or more transaction payment packets may be stored and batched for subsequent processing. Preferably, the PAN from the chip is used in the payment packet. Alternatively, the PAN from the magnetic strip could be used in the payment packet.

It will be understood that the method according to the present invention will be performed largely in software and therefore the present invention extends also to computer programs, on or in a carrier, comprising program instructions for causing a computer or a payment terminal to carry out steps of the method. In particular, the PAN comparison steps and the PIN provision steps may be carried out largely in software. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. The computer program product may be stored in the memory of a card payment terminal and the present invention is intended to extend to card payment terminals programmed to implement the method according to the present invention.

It will be further understood that the present invention may be performed on two, three or more machines or components with certain parts of the computer-implemented method being performed by one machine or component and other parts of the computer-implemented method being performed by another machine or component. The devices may be part of a LAN, WLAN or could be connected together over a communications network including but not limited to the internet. One or more of the method steps could be performed "in the cloud", meaning that remotely located processing power may be utilised to process certain method steps of the present invention. Accordingly, it will be understood that many of the method steps may be performed remotely, by which it is meant that the method steps could be performed either on a separate machine in the same locality or jurisdiction or indeed on a separate machine or machines in one or several remote jurisdictions. For example, the card payment terminal and the processing server may be in one jurisdiction or located in different jurisdictions. The present invention and claims are intended to also cover those instances where the method is performed across two or more machines or pieces of apparatus located in one or more jurisdictions and those situations where the parts of the system are spread out over one or more jurisdictions.

Throughout this specification, the term Card Verification Value (CVV) code has been used however it will be understood that many different terms and acronyms are used to describe the same code, including, but not limited to CVV2, the Card Verification Code (CVC / CVC2), the Card Code Verification (CCV), the Card Security Code (CSC), the Card Verification Data (CVD), the Card Verification Value Code (CVVC) or simply the Verification Code (V-Code). In this specification, the CVV code is a code not stored on the magnetic strip but instead is printed on the card itself. For MasterCard ®, Visa ® and some other Credit and Debit cards, presently, the CVV is a three digit code printed on the rear of the card on the signature strip. Other card providers, such as American Express ®, presently print a four digit CVV code on the front right hand side of the card.

In this specification the terms "include, includes, included and including" and the terms "comprise, comprises, comprised and comprising" are all deemed totally interchangeable and should be afforded the widest possible interpretation.

The invention is in no way limited to the embodiment hereinbefore described but may be varied in both construction and detail within the scope of the appended claims.

## Claims

1. A method (1) of processing a card present, card payment transaction using a card payment terminal comprising the steps of:
swiping the card in a magnetic strip reader and retrieving (11) the personal account number (PAN) from a magnetic strip on the card;
retrieving (21) the PAN from a chip on the card;
comparing (31) the PAN retrieved from the chip with the PAN retrieved from the magnetic strip; and
on the PAN from the chip differing from the PAN from the magnetic strip, declining (51) the card present, card payment transaction.

2. A method (1) as claimed in claim 1 in which the step of retrieving the PAN from the chip on the card comprises using near field communications to retrieve the PAN from the chip on the card.

3. A method (1) as claimed in claim 1 in which the step of retrieving the PAN from the chip on the card comprises inserting the card into a card reader and using a chip reader to read the chip.

4. A method (1) as claimed in any preceding claim in which on the card payment terminal being unable to retrieve the PAN from the magnetic strip, the method comprising the step of declining (51) the card present, card payment transaction.

5. A method (1) as claimed in any preceding claim in which on the card payment terminal being unable to retrieve the PAN from the chip, the method comprising the step of declining (51) the card present, card payment transaction.

6. A method (1) as claimed in any preceding claim comprising the additional steps of:
the card owner entering a Personal Identification Number (PIN) into the card payment terminal, the card payment terminal passing the entered PIN to the chip on the card for PIN verification;
the card payment terminal receiving verification (71) from the chip as to whether or not the PIN entered by the card owner corresponds to a PIN stored on the chip; and
on the PIN entered into the card payment terminal by the card owner differing from the PIN stored on the chip, terminating (51) the card payment transaction, and on the PIN entered into the card payment terminal by the card owner corresponding to the PIN stored on the chip, proceeding (81) with the card payment transaction.

7. A method as claimed in any preceding claim in which there is further provided a remote processing server comprising a processor, an accessible memory and a communications module for communications with the remote card payment terminal; the method comprising the additional steps of:
the card payment terminal generating a payment packet including the PAN and a payment amount and transmitting the payment packet to the processing server over the internet; and
the processing server processing the payment packet and returning a payment packet response to the card payment terminal.

8. A method as claimed in claim 7 in which the PAN for the payment packet is retrieved from the chip.

9. A method as claimed in claim 7 in which the PAN for the payment packet is retrieved from the magnetic strip.

10. A method as claimed in claims 7 to 9 comprising the additional step of entering a CVV number of the card into the card payment terminal and in which the payment processing step of generating a payment packet further comprises including the CVV in the payment packet.
